# EUROPEAN PATENT APPLICATION

(11) **EP 4 089 775 A1**
(43) Date of publication of application: **16.11.2022**
(21) Application number: 21187077.9
(22) Date of filing: 22.07.2021
(51) Int. Cl.: H01M 10/04, H01M 50/209, H01M 50/503, H01M 50/505, H01M 50/516, H01M 50/543, H01M 50/548, H01M 50/553, H01M 50/557

(54) **BATTERY ASSEMBLY AND ASSEMBLING METHOD OF BATTERY ASSEMBLY**

(30) Priority: 14.05.2021 CN 202110526810
(71) Applicant: CALB Co., Ltd., Changzhou City, Jiangsu Province (CN)
(72) Inventor: PAN, Fangfang, Changzhou City, Jiangsu Province (CN); LI, Kui, Changzhou City, Jiangsu Province (CN); XU, Bowei, Changzhou City, Jiangsu Province (CN)
(74) Representative: Becker, Eberhard

(57) **Abstract**

A battery assembly and an assembling method of the assembled battery are provided. The assembled battery includes a first battery (1), a second battery (2), and a busbar (30). The first battery (1) includes a first post assembly (20). The second battery (2) includes a second post assembly (50). The busbar (30) is bent into a first section (31), a second section (32), and a third section (33). The first section (31) is connected to the first post assembly (20), and the third section (33) is connected to the second post assembly (50). The busbar (30) is an integrated U-shaped structure.

## Description

### BACKGROUND

### Technical Field

The disclosure relates to a battery technology, particularly to a battery assembly and an assembling method of the battery assembly.

### Description of Related Art

In the related art, batteries need to be connected in series and in parallel during the assembling process. Due to the structural limitation of the battery itself, the connection of the posts between the batteries in the battery assembling process is challenging in the art.

### SUMMARY

The present disclosure provides a battery assembly and an assembling method of the assembled battery to improve the structure of the battery assembly.

According to the first aspect of the present disclosure, a battery assembly is provided, and the battery assembly includes a first battery, a second battery, and a busbar. The first battery includes a first post assembly. The second battery includes a second post assembly. The busbar is formed integrally, and is bent into a first section, a second section and a third section. Both ends of the second section are respectively connected to the first section and the third section, the first section and the third section are disposed oppositely, the first section is connected to the first post assembly, and the third section is connected to the second post assembly.

According to the second aspect of the present disclosure, an assembling method of a battery assembly is provided, and the assembling method includes the following steps. Providing a first battery, wherein the first battery includes a first post assembly. Providing a second battery, wherein second battery includes a second post assembly. Providing a busbar, wherein the busbar is formed integrally and is bent into a first section, a second section and a third section, wherein both ends of the second section are respectively connected to the first section and the third section, and the first section and the third section are disposed oppositely. Connecting the first section to the first post assembly, and connecting the third section to the second post assembly.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic structural diagram of a battery assembly according to a first exemplary embodiment.
FIG. 2 is a partially exploded schematic diagram of a structure of a assembled battery assembly according to the first exemplary embodiment.
FIG. 3 is a schematic diagram of a partial structure of a first battery of a battery assembly according to the first exemplary embodiment.
FIG. 4 is a partially exploded schematic diagram of a structure of a first battery of a battery assembly according to the first exemplary embodiment.

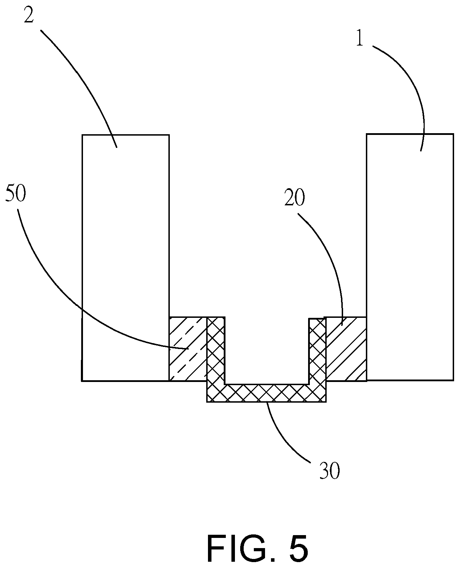

FIG. 5 is a partially exploded schematic diagram of a structure of a first battery of a battery assembly according to a second exemplary embodiment.
FIG. 6 is a partially exploded schematic diagram of a structure of a first battery of a battery assembly according to a third exemplary embodiment.
FIG. 7 is a schematic flowchart of an assembling method of a battery assembly according to an exemplary embodiment.
FIG. 8 is a schematic structural diagram of an assembling method of a battery assembly according to an exemplary embodiment.
FIG. 9 is a schematic structural diagram of an assembling method of a battery assembly according to another exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

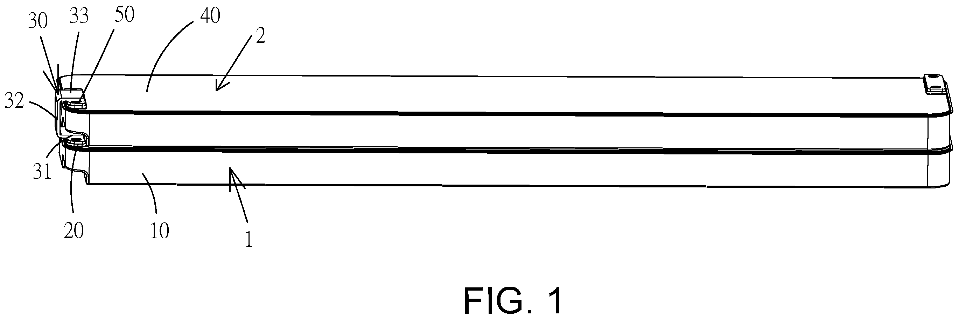

An embodiment of the present disclosure provides a battery assembly. In FIG. 1 to FIG. 4, the battery assembly includes a first battery 1, a second battery 2 and a busbar 3. The first battery 1 includes a first post assembly 20. The second battery 2 includes a second post assembly 50. The busbar 30 is formed integrally, and is bent into a first section 31, a second section 32 and a third section 33. Both ends of the second section 32 are respectively connected to the first section 31 and the third section 33, the first section 31 and the third section 33 are disposed oppositely, the first section 31 is connected to the first post assembly 20, and the third section 33 is connected to the second post assembly 50.

The battery assembly according to an embodiment of the present disclosure includes the first battery 1, the second battery 2 and the busbar 30, and the busbar 30 makes the electrical connection between the first battery 1 and the second battery 2. Since the busbar 30 is an integrated U-shaped structure, it is convenient to make the connection between the first post 20 assembly and the second post assembly 50.

During assembling, the first battery 1 and the second battery 2 are disposed side by side. The busbar 30 formed as one piece only needs to make the connection between the first post assembly 20 and the second post assembly 50, and the location of the first post assembly 20 and the second post assembly 50 is not limited here.

In one embodiment, the first battery 1 includes two opposite first surfaces 12 and four second surfaces 13 disposed around the first surfaces 12, and the first post assembly 20 is disposed on one of the first surfaces 12. The second battery 2 includes two opposite third surfaces 42 and four fourth surfaces 43 disposed around the third surfaces 42, and the second post assembly 50 is disposed on one of the third surfaces 42. The one of the first surfaces 12 and the one of the third surfaces 42 are disposed opposite to each other, such that the first section 31 is located on a side of the one of the first surfaces 12 where the first post assembly 20 is provided, and the third section 33 is located on a side of the one of the third surfaces 42 where the second post assembly 50 is provided, such that it is convenient to make the connection between the first section 31 and the first post assembly 20 and the connection between the third section 33 and the second post assembly 50.

It is noted that, the one of the first surfaces 12 and the one of the third surfaces 42 are disposed opposite to each other. That is, the one of the first surfaces 12 of the first battery 1 and the one of the third surfaces 42 of the second battery 2 are disposed side by side. Therefore, in the direction perpendicular to the first surface 12, the orthographic projection of the first surface 12 provided with the first post assembly 20 is a surface, and the area of this surface is equal to the area of the first surface 12 itself. In the direction perpendicular to the third surface 42, the orthographic projection of the third surface 42 provided with the second post assembly 50 is a surface, and the area of this surface is equal to the area of the third surface 42 itself.

In one embodiment, the area of the first surface 12 is greater than the area of the second surface 13, and the area of the third surface 42 is greater than the area of the fourth surface 43. The first post assembly 20 is disposed on the larger surface of the first battery 1, and the second post assembly 50 is disposed on the larger surface of the second battery 2. That is, the first battery 1 and the second battery 2 are assembled together such that the larger surface faces the larger surface, and the busbar 30 has a U-shaped structure, so it is convenient to make the connection between the first post assembly 20 and the second post assembly 50.

The first battery 1 includes a first battery body 10. The first battery body 10 includes two opposite first surfaces 12 and four second surfaces 13 disposed around the first surface 12, such that the first battery body 10 approximately has the structure of a first rectangular. The second battery 2 includes a second battery body 40. The second battery body 40 includes two opposite third surfaces 42 and four fourth surfaces 43 disposed around the third surface 42, such that the second battery body 40 approximately has the structure of a second rectangular. Specifically, the appearance of the first battery 1 is approximately the first rectangular, and the appearance of the second battery 2 is approximately the second rectangular.

The two opposite first surfaces 12 are the large surfaces of the first battery body 10, and the four second surfaces 13 are the small surfaces of the first battery body 10. The four second surfaces 13 include two pairs of small surfaces, namely a first pair of small surfaces extending along the length direction of the first battery body 10, and a second pair of small surfaces extending along the width direction of the first battery body 10. And the area of the first pair of small surfaces is larger than the area of the second pair of small surfaces, but both are smaller than the area of the large surfaces. The first post assembly 20 is disposed on the first surface 12 so as to ensure that the first post assembly 20 has a reliable supporting surface to ensure the stability of the first post assembly 20.

Correspondingly, the two opposite third surfaces 42 are the large surfaces of the second battery body 40, and the four fourth surfaces 43 are the small surfaces of the second battery body 40. The four fourth surfaces 43 include two pairs of small surfaces, namely a first pair of small surfaces extending in the length direction of the second battery body 40, and a second pair of small surfaces extending in the width direction of the second battery body 40. And the area of the first pair of small surfaces is larger than the area of the second pair of small surfaces, but both are smaller than the area of the large surfaces. The second post assembly 50 is disposed on the third surface 42 so as to ensure that the second post assembly 50 has a reliable supporting surface to ensure the stability of the second post assembly 50.

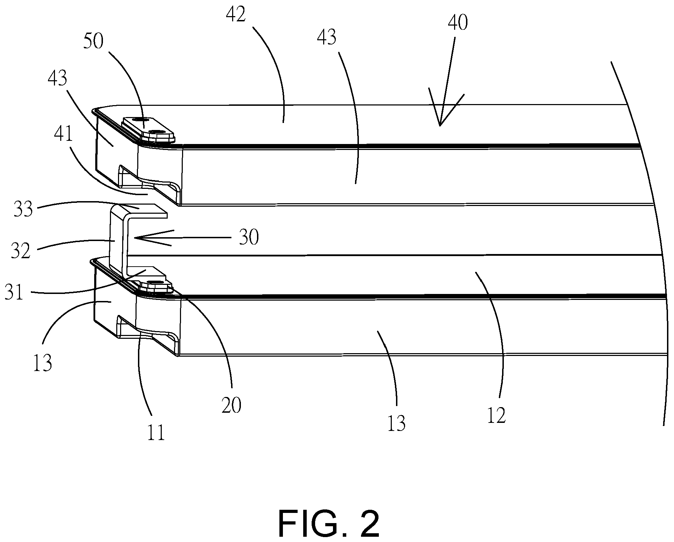

As shown in FIG. 2, the busbar 30 is bent into the first section 31, the second section 32, and the third section 33. Both ends of the second section 32 are respectively connected to the first section 31 and the third section 33, and the first section 31 and the third section 33 are disposed oppositely, such that the busbar 30 is bent into a U-shaped structure.

It is noted that, arranging the first battery 1 and the second battery 2 side by side indicates that the first battery 1 and the second battery 2 are assembled together, at this time, the first battery 1 and the second battery 2 may be stacked vertically (from bottom to top) or horizontally (from left to right), the disclosure is not limited thereto.

In one embodiment, the second section 32 and the fourth surface 43 are substantially in parallel, and the second section 32 and the second surface 13 are also substantially in parallel, which ensures that the first section 31 and the third section 33 respectively correspond to the first surface 12 and the third surface 42, such that it is convenient for the first section 31 and the third section 33 to connect the first post assembly 20 and the second post assembly 50, respectively.

The second section 32 and the second surface 13 are substantially in parallel, and the substantial parallelism here is to ignore manufacturing margins and the like. The second section 32 may be parallel to the first pair of small surfaces extending in the length direction of the first battery body 10, or the second section 32 may be parallel to the second pair of small surfaces extending in the width direction of the first battery body 10.

Optionally, the first section 31 is substantially parallel to the first surface 12. That is, when the end of the first post assembly 20 connected to the first section 31 is parallel to the first surface 12, the first section 31 and the first surface 12 are made substantially in parallel. At this time, the angle between the first section 31 and the second section 32 is a right angle. Of course, in some embodiments, it is not excluded that the first section 31 is disposed obliquely to the first surface 12. In this case, the angle between the first section 31 and the second section 32 may be an acute angle or an obtuse angle.

Correspondingly, the third section 33 and the third surface 42 are substantially in parallel. That is, when the end of the second post assembly 50 connected to the third section 33 is parallel to the third surface 42, the third section 33 and the third surface 42 may be substantially in parallel. At this time, the angle between the third section 33 and the second section 32 is a right angle. Of course, in some embodiments, it is not excluded that the third section 33 is disposed obliquely to the third surface 42. In this case, the angle between the third section 33 and the second section 32 may be an acute angle or an obtuse angle.

In one embodiment, the first section 31 and the second section 32 are substantially perpendicular, and the second section 32 and the third section 33 are approximately perpendicular, ensuring that it is convenient for the busbar 30 to connect the first post assembly 20 and the second post assembly 50, and the battery configuration space may be arranged effectively. If the substantial perpendicularity indicates that margins are ignored, the first section 31 and the second section 32 may be disposed perpendicularly to each other, and the second section 32 and the third section 33 can be disposed perpendicularly to each other. Optionally, the included angle between the first section 31 and the second section 32 is 80 degrees to 100 degrees, and the included angle between the first section 31 and the second section 32 is 85 degrees to 95 degrees. The included angle between the second section 32 and the third section 33 is 80 degrees to 100 degrees, and the included angle between the second section 32 and the third section 33 is 85 degrees to 95 degrees.

It should be noted that, the substantial perpendicularity between the first section 31 and the second section 32 is to take into account the practical processing margins and the likes. That is, if the processing and manufacturing margins are ignored, the angle between the first section 31 and the second section 32 is a right angle. Optionally, the included angle between the first section 31 and the second section 32 is 80 degrees to 100 degrees, further, the included angle between the first section 31 and the second section 32 is 85 degrees to 95 degrees. As shown in FIG. 2, at the arc transition between the first section 31 and the second section 32, the approximate perpendicularity between the first section 31 and the second section 32 here is to show the overall extension direction of the two (the first and second sections 31, 32), and do not specifically indicate that there must be a right-angle transition between the first section 31 and the second section 32. Correspondingly, the transition of the second section 32 and the third section 33 is also similar to the connection relationship between the first section 31 and the second section 32, and thus is not repeated herein for brevity.

In one embodiment, the orthographic projection of the second section 32 on the plane where the first surface 12 is located is outside the first surface 12, and the orthographic projection of the second section 32 on the plane where the third surface 42 is located is outside the third surface 42. That is, one end of the first section 31 needs to extend outside the peripheral edges of the first battery body 10 and the second battery body 40, in this way, the second section 32 is prevented from being in the three-dimensional space where the peripheral edges of the first battery body 10 and the second battery body 40 are located, thereby facilitating subsequent connections.

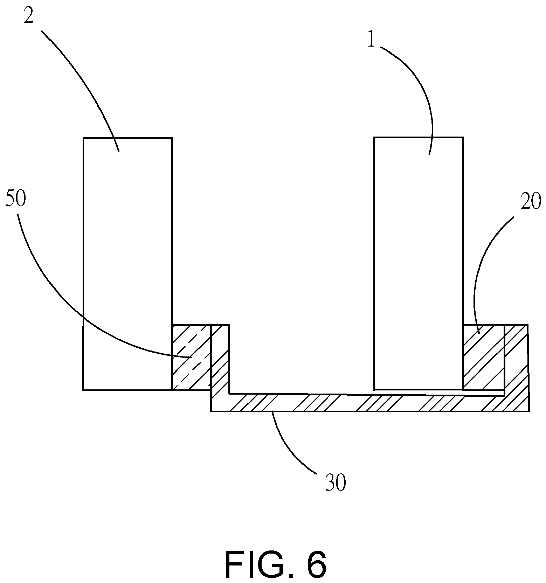

Furthermore, as shown in FIG. 6, the first post assembly 20 is disposed on one of the first surfaces 12 away from the second battery 2, and the second post assembly 50 is disposed on one of the third surfaces 42 adjacent to the first battery 1. That is, the second section 32 needs to straddle the first battery body 10 to ensure that the third section 33 is connected to the second post assembly 50.

Optionally, the first post assembly 20 is disposed on the other one of the first surfaces 12 adjacent to the second battery 2, and the second post assembly 50 is disposed on the other one of the third surfaces 42 away from the first battery 1. That is, the second section 32 needs to straddle the second battery body 40 to ensure that the third section 33 is connected to the second post assembly 50.

In one embodiment, the first post assembly 20 is disposed on the other one of the first surfaces 12 adjacent to the second battery 2, and the second post assembly 50 is disposed on one of the third surfaces 42 adjacent to the first battery 1. That is, the first post assembly 20 and the second post assembly 50 are directly opposite to each other. The busbar 30 is clamped between the first battery body 10 and the second battery body 40 to facilitate the connection of the first section 31 and the third section 33 respectively with the first post assembly 20 and the second post assembly 50. In this embodiment, the vertical projection of the second section 32 on the plane where the first surface 12 is located is outside the first surface 12, and the vertical projection of the second section 32 on the plane where the third surface 42 is located is outside the third surface 42. Alternatively, the vertical projection of the second section 32 on the plane where the first surface 12 is located is inside the first surface 12, and the vertical projection of the second section 32 on the plane where the third surface 42 is located is inside the third surface 42.

In one embodiment, there are two first post assemblies 20 and two second post assemblies 50, and there are two busbars 30. The two busbars 30 respectively connect two pairs of the first post assembly 20 and the second post assembly 50. Alternatively, one of the busbars 30 may be connected to one pair of the first post assembly 20 and the second post assembly 50, and the other one of the busbars 30 may be connected to the post assembly of the third battery. The details may be determined based on whether the batteries are connected in series or in parallel, which is not limited here.

Optionally, the two first post assemblies 20 may be disposed on the same first surface 12. Alternatively, the two first post assemblies 20 may be respectively disposed on the two different first surfaces 12. Correspondingly, the two second post assemblies 50 may be disposed on the same third surface 42. Alternatively, the two second post assemblies 50 may be respectively disposed on the two different third surfaces 42.

In one embodiment, the first section 31 is welded to the first post assembly 20, and the third section 33 is welded to the second post assembly 50, so as to ensure the stability of the connection.

In an embodiment, the thickness of the welded part of the first section 31 and the first post assembly 20 is smaller than the thickness of the second section 32, such that it is convenient to make the connection between the welding of the first section 31 and the first post assembly 20. Specifically, it may be understood that the first section 31 is connected and thinned, such that the energy used for welding may weld the first section 31 to the first post assembly 20 rapidly.

It is noted that, the first section 31 may be partially thinned. Of course, it does not exclude that the first section 31 may be thinned as a whole.

Correspondingly, the thickness of the welding part of the third section 33 and the second post assembly 50 is smaller than the thickness of the second section 32, such that it is convenient to make the connection between the welding of the third section 33 and the second post assembly 50. Specifically, it may be understood that the third section 33 is connected and thinned, such that the energy used for welding may weld the third section 33 and the second post assembly 50 rapidly.

It is noted that, the third section 33 may be partially thinned. Of course, it does not rule out that the third section 33 may be thinned as a whole.

In one embodiment, the busbar 30 is formed integrally, which facilitates processing and has high structural stability. The busbar 30 is a metal sheet.

In one embodiment, the busbar 30 and the first post assembly 20 are one structure as a whole. That is, the busbar 30 and the first post assembly 20 are an integrated structure that has a relatively simple structure with higher stability. The integrated structure may include a plurality of independent parts that are formed before they are fixed and connected to each other. That is, the busbar 30 and the first post assembly 20 have been connected before the batteries are assembled, instead of being connected during the battery assembly process. The integrated structure may also be a structure formed integrally. That is, the busbar 30 and the first post assembly 20 are formed integrally.

Optionally, the busbar 30 and the second post assembly 50 are an integrated structure. That is, the busbar 30 and the first post assembly 50 are an integrated structure that has a relatively simple structure with higher stability. The busbar 30 and the second post assembly 50 have been connected before the batteries are assembled, instead of being connected during the battery assembling process. The integrated structure may also be a structure formed integrally. That is, the busbar 30 and the second post assembly 50 are formed integrally.

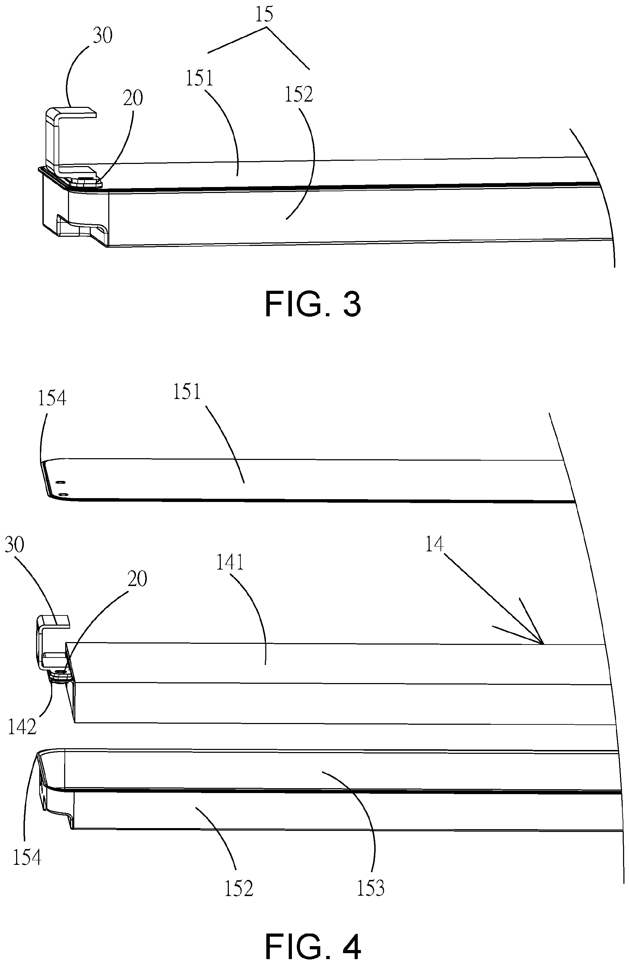

In one embodiment, as shown in FIG. 4, the first battery body 10 includes a cell 14 and a casing 15. The cell 14 is connected to the first post assembly 20. The cell 14 is located in the casing 15. A first recess 11 and the first post assembly 20 are both disposed on the casing 15, which not only causes convenient installation but also a relatively simple structure. The casing 15 may be adapted to install the first post assembly 20.

Optionally, the material of the casing 15 may be stainless steel or aluminum, which has good corrosion resistance and sufficient strength.

In one embodiment, the thickness of the casing 15 is uniform, which not only provides strong structural stability but also facilitates processing.

In one embodiment, as shown in FIG. 3 and FIG. 4, the casing 15 includes a first casing element 151 and a second casing element 152. The second casing element 152 is connected to the first casing element 151 to enclose the cell 14. The first casing element 151 and the second casing element 152 are disposed separately, which facilitates the installation of the cell 14 and it is convenient for the processing.

Optionally, the first casing element 151 and the second casing element 152 may both be formed with a receiving chamber 153. After the first casing element 151 and the second casing element 152 are butted to each other, the cell 14 is in a chamber formed by the two receiving chambers 153. The depths of the receiving chambers 153 of the first casing element 151 and the second casing element 152 may be the same with or different from each other, which is not limited here.

Optionally, the first casing element 151 is a flat plate, and the second casing element 152 is formed with the receiving chamber 153 in which the cell 14 is located. The configuration of the flat plate may facilitate subsequent connections and has less difficulty in processing.

Furthermore, a protruding edge 154 is provided on the circumferential edge of the second casing element 152, and the first casing element 151 is welded to the protruding edge 154 to ensure the reliable welding of the first casing element 151 and the second casing element 152, so as to provide the stability of the connection. The arrangement of the protruding edge 154 is mainly to ensure that the welding area is increased, thereby improving the stability of the welding.

Optionally, when the first casing element 151 is provided with the receiving chamber 153, the circumferential edge of the first casing element 151 may also be provided with the protruding edge 154, and the protruding edge 154 of the first casing element 151 is welded to the protruding edge 154 of the second casing element 152.

It is noted that, the protruding edge 154 may be understood as a flange, for example, a flange that is formed on the peripheral edge of a flat plate and extends outwards, or a flange that is formed on a side wall of a structure with the receiving chamber 153, wherein at this time, the flange is approximately perpendicular to the side wall. For the protruding edges 154 provided on the circumferential edges of the first casing element 151 and the second casing element 152 mentioned in the above embodiments, this configuration can be referred to as a reference, such that the protruding edge 154 of the first casing element 151 and the protruding edge 154 of the second casing element 152 may face each other directly, thereby facilitating the connection.

In one embodiment, as shown in FIG. 4, the cell 14 includes a cell body 141 and a tab 142, and the tab 142 extends from the cell body 141 in the length direction. The tab 142 is connected to the first post assembly 20. At this time, the first post assembly 20 may be disposed at the end portion of the first battery body 10 to facilitate the connection and to make full use of the space of the battery in the length direction. The tab 142 may be directly connected to the first post assembly 20, that is, the tab 142 may be directly welded to the first post assembly 20, or the tab 142 may be connected to the first post assembly 20 with a metal transition piece. The specific connection may adopt welding, and the use of riveting and the likes are also not excluded, the disclosure is not limited thereto.

It is noted that, the cell body 141 includes two or more pole pieces, and the tab 142 includes two or more single tabs. The single tabs respectively extend from the corresponding pole piece, the width of the single tab is smaller than the width of the pole piece, and a plurality of single tabs are stacked to form the tab 142 and are connected to the first post assembly 20. The tab 142 may be welded to the first post assembly 20. The Monolithic tabs are made of metal foil with good electrical and thermal conductivity, such as aluminum, copper, nickel, etc.

In some embodiments, there are two first post assemblies 20. The two first post assemblies 20 are respectively a positive post assembly and a negative post assembly. And there are also two tabs 142. The two tabs 142 are respectively a positive tab and a negative tab. The positive post assembly is connected to the positive tab, and the negative post assembly is connected to the negative tab.

It is noted that, the first post assembly 20 is insulated from the casing 15. For example, an insulating member may be adopted for insulation between the two, or an insulating coating may be adopted for such insulation, which is not limited here, and can be selected according to actual needs.

It is noted that, the structure and configuration of the second battery body 40 and the second post assembly 50 may be referred to the first post assembly 20 and the first battery body 10 mentioned above and thus is not repeated here. In some embodiments, it is not excluded that the first battery 1 and the second battery 2 have exactly the same structure.

In an embodiment, the first recess 11 may be provided on the first battery body 10, and the first recess 11 and the first post assembly 20 may be respectively located on the two first surfaces 12. At this time, the first recess 11 may be adapted to accommodate the second post assembly 50 of the second battery 2 or may be adapted to accommodate the post assembly of the third battery. The projections of the first recess 11 and the first post assembly 20 in a direction perpendicular to the first battery body 10 at least partially overlap, such that when the first battery 1 and the second battery 2 are assembled together, the first battery 1 and the second battery 2 are aligned with each other to ensure that the second post assembly 50 may be accommodated in the first recess 11 more reliably.

Optionally, a second recess 41 may also be provided on the second battery body 40. At this time, the second recess 41 may be adapted to accommodate the second post assembly 50 of the second battery 2 or the post assembly of the third battery, to which the disclosure does not limited, as it is about how to embody it. If the post assembly of the battery protrudes from the battery body, a recess may be provided on the other battery to accommodate the adjacent post assemblies, such that the distance between the batteries is minimized, which is beneficial to increase the energy density of the battery assembly. For the specific structure of the first recess 11 on the first battery body 10 and the second recess 41 on the second battery body 40, please refer to FIG. 2.

Optionally, the first post assembly 20 may protrude from the first battery body 10, or may be accommodated in the first battery body 10. That is, a groove may be provided in the first battery body 10 to accommodate the first post assembly 20. Correspondingly, the second post assembly 50 may protrude from the second battery body 40, or may be accommodated in the second battery body 40. That is, a groove may be provided in the second battery body 40 to accommodate the second post assembly 50.

In an embodiment, the battery assembly may further include a third battery. There may be one or at least two third batteries, and the structure of the third battery is similar or completely the same as the first battery 1 and the second battery 2. The details are not repeated herein.

In one embodiment, the length of the first battery 1 is d, 400mm≤d≤2500mm, the width of the first battery 1 is e, and the height of the first battery 1 is f, 2e ≦d≦ 50e, and/or 0.5f ≦ e ≦ 20f.

Optionally, the length of the second battery 2 is d, 400mm≤d≤2500mm, the width of the second battery 2 is e, and the height of the second battery 2 is f, 2e≤d≤50e, and/or 0.5≤ e≤20f.

Furthermore, 50mm≤e≤200mm, 10mm≤f≤100mm.

Preferably, 4e≤d≤25e, and/or 2f≤e≤10f.

In the battery of the above embodiment, under the condition that sufficient energy density is ensured, the ratio of the battery length to the width is relatively large, and furthermore, the ratio of the battery width to the height is relatively large.

In one embodiment, the length of the first battery 1 is d, the width of the first battery 1 is e, and the height of the first battery 1 is f, 4e≤d≤7e, and/or 3f≤e≤7f. That is, the ratio of the battery length to the width of the battery in this embodiment is relatively large, thereby increasing the energy density of the battery and facilitating the subsequent formation of a battery assembly.

Optionally, the length of the second battery 2 is d, the width of the second battery 2 is e, and the height of the second battery 2 is f, 4e≤d≤7e, and/or 3f≤e≤7f.

Optionally, the length of the first battery 1 and/or the second battery 2 may be 500mm to 1500mm, the width of the first battery 1 and/or the second battery 2 may be 80mm to 150mm, and the height of the first battery 1 and/or the second battery 2 may be 15mm to 25mm.

In one embodiment, the first battery 1 is a laminated battery, and the second battery 2 is a laminated battery, which is not only convenient for forming but also can be processed to obtain a longer battery.

Specifically, the cell 14 is a laminated cell. The cell 14 has a first pole piece, a second pole piece having electrical property opposite to that of the first pole piece, and a diaphragm piece disposed between the first pole piece and the second pole piece. The first pole piece, the second pole piece and the diaphragm piece are stacked together, such that multiple pairs of the first pole pieces and the second pole pieces are stacked together to form a laminated cell.

Optionally, the first battery 1 and/or the second battery 2 may be wound batteries. That is, the first pole piece, the second pole piece having electrical property opposite to that of the first pole piece, and the diaphragm piece disposed between the first pole piece and the second pole piece are wound to obtain a wound cell.

It is noted that, the battery assembly mentioned above may be a battery module or a battery pack.

An embodiment of the present disclosure also provides a battery pack including the battery assembly mentioned above.

The battery assembly of the battery pack according to an embodiment of the present disclosure includes a first battery 1, a second battery 2, and a busbar 30, and the busbar 30 makes the electrical connection between the first battery 1 and the second battery 2. The first post assembly 20 is disposed on the large surface of the first battery body 10, the second post assembly 50 is disposed on the large surface of the second battery body 40, and the busbar 30 has a U-shaped structure, such that it is convenient to make the connection between the first post assembly 20 and the second post assembly 50.

Optionally, the battery pack includes at least two assembled batteries, the battery pack may also include a box in which the at least two assembled batteries are disposed.

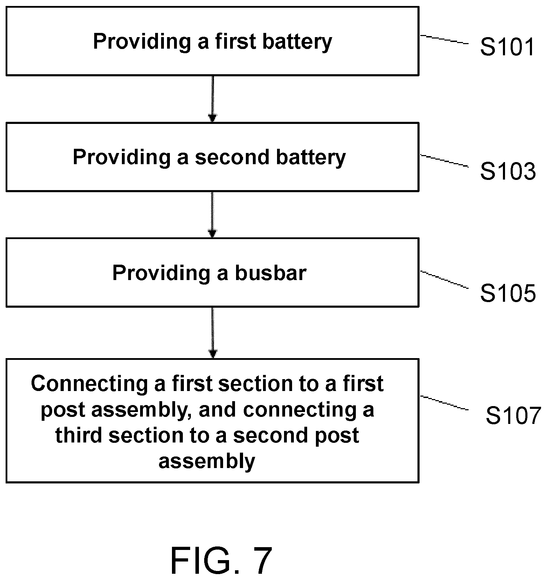

An embodiment of the present disclosure also provides an assembling method of a battery assembly. Please refer to FIG. 7, the assembling method of the battery assembly includes the following steps.
S101: providing a first battery 1. The first battery 1 includes a first post assembly 20.
S103: providing a second battery 2. The second battery 2 includes a second post assembly 50.
S105: providing a busbar 30. The busbar 30 is formed integrally, and is bent into a first section 31, a second section 32 and a third section 33. Both ends of the second section 32 are respectively connected to the first section 31 and the third section 33, and the first section 31 and the third section 33 are disposed oppositely.
S107: connecting the first section 31 to the first post assembly 20, and connecting the third section 33 to the second post assembly 50.

The assembling method of the battery assembly according to an embodiment of the present disclosure makes the electrical connection of the first battery 1 and the second battery 2 through the busbar 30. Since the busbar 30 is an integrated U-shaped structure, it is convenient to make the connection between the first post assembly 20 and the second post assembly 50.

In one embodiment, the first battery 1 further includes two opposite first surfaces 12, four second surfaces 13 disposed around the first surfaces 12, and a first post assembly 20. The area of each of the first surfaces 12 is greater than the area of each of the second surfaces 13, and the first post assembly 20 is disposed on one of the first surfaces 12. The second battery 2 also includes two opposite third surfaces 42, four fourth surfaces 43 disposed around the third surface 42, and a second post assembly 50. The area of each of the third surfaces 42 is greater than the area of each of the fourth surfaces 43, and the second post assembly 50 is disposed on one of the third surfaces 42. The one of the first surfaces 12 and the one of the third surfaces 42 are disposed opposite to each other, such that the first section 31 is located on a side of the one of the first surfaces 12 where the first post assembly 20 is provided, the third section 33 is located on a side of the one of the third surfaces 42 where the second post assembly 50 is provided, such that it is convenient to make the connection between the first section 31 and the first post assembly 20, and the connection between the third section 33 and the second post assembly 50.

The first post assembly 20 is disposed on the large surface of the first battery 1, the second post assembly 50 is disposed on the large surface of the second battery 2, and the busbar 30 has a U-shaped structure, such that it is convenient to make the connection between the first post assembly 20 and the second post assembly 50.

It is noted that, the first battery 1, the second battery 2, and the busbar 30 are not provided in a particular order.

In one embodiment, connecting the first section 31 to the first post assembly 20 and connecting the third section 33 to the second post assembly 50 includes welding the first section 31 to the first post assembly 20, such that the second section 32 extends in a direction away from the first surfaces 12 of the first battery 1, placing one end of the second battery 2 between the first section 31 and the third section 33, and welding the third section 33 to the second post assembly 50.

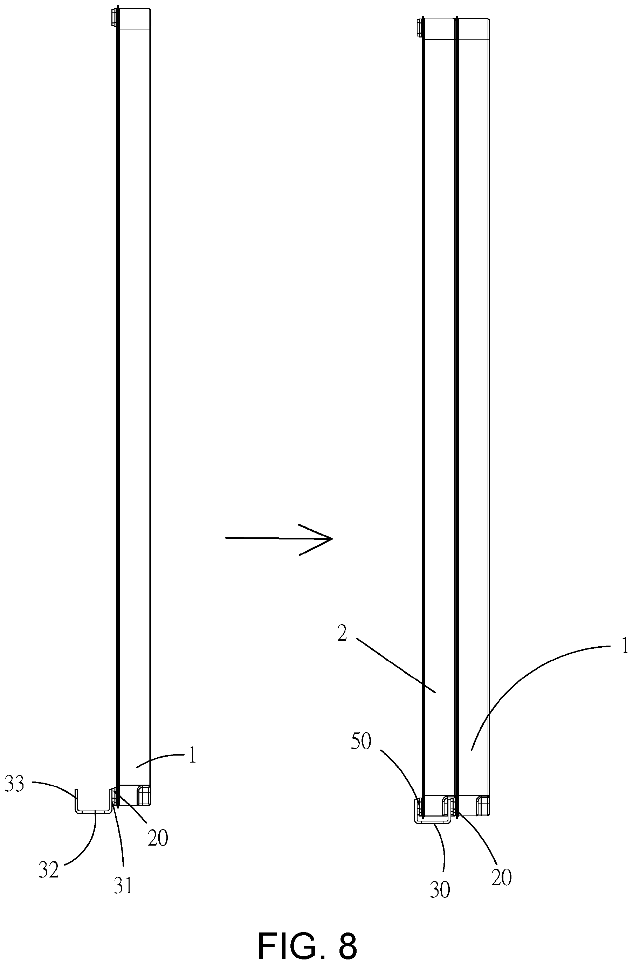

As shown in FIG. 8, the busbar 30 is welded to the first post assembly 20. That is, the welding position is larger such that it is more convenient for welding. At this time, the busbar 30 as a whole is located on one side of the first battery 1, and then one end of the second battery 2 is placed in the U-shaped space formed by the busbar 30, such that the third section 33 and the second post assembly 50 directly face each other for the welding to be completed.

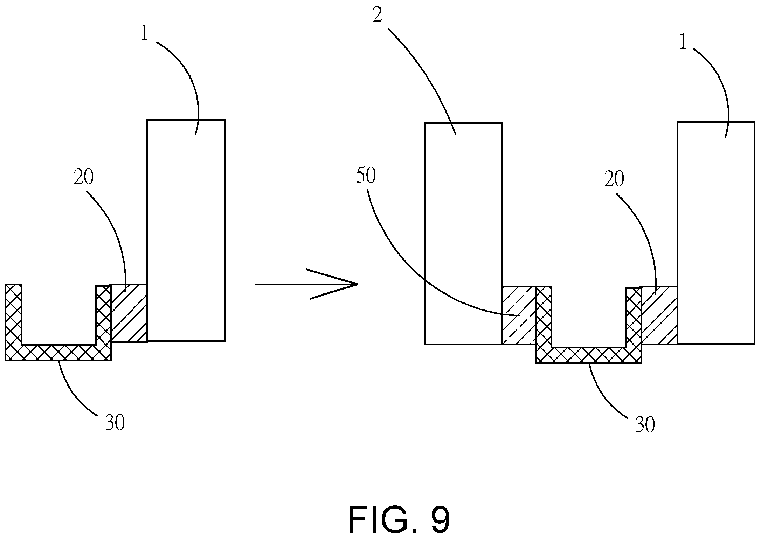

In one embodiment, connecting the first section 31 to the first post assembly 20 and the third section 33 to the second post assembly 50 includes welding the first section 31 to the first post assembly 20, such that the second section 32 extends in a direction away from the first surfaces 12 of the first battery 1, placing the second battery 2 on the side of the third section 33 away from the first section 31, and wielding the third section 33 and the second post assembly 50. That is, the first post assembly 20 and the second post assembly 50 are directly opposed to each other, such that the busbar 30 is clamped between the first battery 1 and the second battery 2 to form welds, as shown in FIG. 9.

It is noted that, the above-mentioned welding can be any kind of welding including laser welding, ultrasonic welding, and resistance welding. For the specific structure of the first battery 1 and the second battery 2, please refer to the structure of the battery assembly mentioned above. The details are not repeated herein.

In one embodiment, the assembling method of the battery assembly is adapted to form the battery assembly mentioned above.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative

## Claims

1. A battery assembly, comprising:
a first battery (1), comprising a first post assembly (20);
a second battery (2), comprising a second post assembly (50); and
a busbar (30), wherein the busbar (30) is formed integrally, and is bent into a first section (31), a second section (32), and a third section (33), both ends of the second section (32) are respectively connected to the first section (31) and the third section (33), the first section (31) and the third section (33) are disposed oppositely, the first section (31) is connected to the first post assembly (20), and the third section (33) is connected to the second post assembly (50).

2. The battery assembly according to claim 1, wherein the first battery (1) further comprises two opposite first surfaces (12) and four second surfaces (13) disposed around the first surfaces (12), and the first post assembly (20) is disposed on one of the first surfaces (12);
the second battery (2) further comprises two opposite third surfaces (42) and four fourth surfaces (43) disposed around the third surfaces (42), and the second post assembly (50) is disposed on one of the third surfaces (42);
the one of the first surfaces (12) and the one of the third surfaces (42) are disposed opposite to each other, such that the first section (31) is located on a side of the one of the first surfaces (12) where the first post assembly (20) is provided, the third section (33) is located on a side of the one of the third surfaces (42) where the second post assembly (50) is provided.

3. The battery assembly according to claim 2, wherein an area of each of the first surfaces (12) is greater than an area of each of the second surfaces (13);
an area of each of the third surfaces (42) is greater than an area of each of the fourth surfaces (43).

4. The battery assembly according to claim 3, wherein the second section (32) is substantially parallel to the fourth surfaces (43).

5. The battery assembly according to claim 3, wherein the first section (31) and the second section (32) are substantially perpendicular, and the second section (32) and the third section (33) are substantially perpendicular.

6. The battery assembly according to claim 3, wherein an orthographic projection of the second section (32) on a plane where the first surfaces (12) are located is outside the first surfaces (12), and an orthographic projection of the second section (32) on the plane where the third surfaces (42) are located is outside the third surfaces (42).

7. The battery assembly according to claim 3, wherein the first post assembly (20) is disposed on the other one of the first surfaces (12) away from the second battery (2), the second post assembly (50) is disposed on the one of the third surfaces (42) adjacent to the first battery (1);
or, the first post assembly (20) is disposed on the one of the first surfaces (12) adjacent to the second battery (2), and the second post assembly (50) is disposed on the other one of the third surfaces (42) away from the first battery (1);
or, the first post assembly (20) is disposed on the one of the first surfaces (12) adjacent to the second battery (2), and the second post assembly (50) is disposed on the one of the third surfaces (42) adjacent to the first battery (1).

8. The battery assembly according to claim 3, wherein the first section (31) is welded to the first post assembly (20), and the third section (33) is welded to the second post assembly (50).

9. The battery assembly according to claim 3, wherein the busbar (30) and the first post assembly (20) are an integrated structure, or the busbar (30) and the second post assembly (50) are an integrated structure.

10. The battery assembly according to any one of claims 1-9, wherein a length of at least one of the first battery (1) and the second battery (2) is d, a width of at least one of the first battery (1) and the second battery (2) is e, a height of at least one of the first battery (1) and the second battery (2) is f, and 2e≤d≤50e, and/or 0.5f≤e≤20f;
400mm≤d≤2500mm.

11. An assembling method of a battery assembly, the assembling method comprising:
providing a first battery (1), wherein the first battery (1) includes a first post assembly (20);
providing a second battery (2), wherein the second battery (2) includes a second post assembly (50);
providing a busbar (30), wherein the busbar (30) is formed integrally, and is bent into a first section (31), a second section (32), and a third section (33), both ends of the second section (32) are respectively connected to the first section (31) and the third section (33), and the first section (31) and the third section (33) are disposed oppositely; and
connecting the first section (31) to the first post assembly (20), and connecting the third section (33) to the second post assembly (50).

12. The assembling method of the battery assembly according to claim 11, wherein the first battery (1) further comprises two opposite first surfaces (12) and four second surfaces (13) disposed around the first surfaces (12), an area of each of the first surfaces (12) is greater than an area of each of the second surfaces (13), and the first post assembly (20) is disposed on one of the first surfaces (12);
the second battery (2) further comprises two opposite third surfaces (42) and four fourth surfaces (43) disposed around the third surfaces (42), an area of each of the third surfaces (42) is greater than an area of each of the fourth surfaces (43), and the second post assembly (50) is disposed on one of the third surfaces (42); and
the one of the first surfaces (12) and the one of the third surfaces (42) are disposed opposite to each other, such that the first section (31) is located on a side of the one of the first surfaces (12) where the first post assembly (20) is provided, and the third section (33) is located on a side of the one of the third surfaces (42) where the second post assembly (50) is provided.

13. The assembling method of the battery assembly according to claim 11 or 12, wherein connecting the first section (31) to the first post assembly (20) and connecting the third section (33) to the second post assembly (50) comprise:
welding the first section (31) to the first pole assembly (20), such that the second section (32) extends in a direction away from the first battery (1);
placing one end of the second battery (2) between the first section (31) and the third section (33); and
welding the third section (33) to the second post assembly (50).

14. The assembling method of the battery assembly according to claim 11 or 12, wherein connecting the first section (31) to the first post assembly (20) and connecting the third section (33) to the second post assembly (50) comprise:
welding the first section (31) to the first post assembly (20), such that the second section (32) extends in a direction away from the first battery (1);
placing the second battery (2) on a side of the third section (33) away from the first section (31); and
welding the third section (33) to the second post assembly (50).

## Amended claims

### Amended claims in accordance with Rule 137(2) EPC.

1. A battery assembly, comprising:
a first battery (1), comprising a first post assembly (20);
a second battery (2), comprising a second post assembly (50); and
a busbar (30), wherein the busbar (30) is formed integrally, and is bent into a first section (31), a second section (32), and a third section (33), both ends of the second section (32) are respectively connected to the first section (31) and the third section (33), the first section (31) and the third section (33) are disposed oppositely, the first section (31) is connected to the first post assembly (20), and the third section (33) is connected to the second post assembly (50),
wherein the first battery (1) further comprises two opposite first surfaces (12) and four second surfaces (13) disposed around the first surfaces (12), and the first post assembly (20) is disposed on one of the first surfaces (12),
the second battery (2) further comprises two opposite third surfaces (42) and four fourth surfaces (43) disposed around the third surfaces (42), and the second post assembly (50) is disposed on one of the third surfaces (42),
the one of the first surfaces (12) and the one of the third surfaces (42) are disposed opposite to each other, such that the first section (31) is located on a side of the one of the first surfaces (12) where the first post assembly (20) is provided, the third section (33) is located on a side of the one of the third surfaces (42) where the second post assembly (50) is provided,
an area of each of the first surfaces (12) is greater than an area of each of the second surfaces (13), and an area of each of the third surfaces (42) is greater than an area of each of the fourth surfaces (43).

2. The battery assembly according to claim 1, wherein the second section (32) is substantially parallel to one of the fourth surfaces (43).

3. The battery assembly according to claim 1, wherein the first section (31) and the second section (32) are substantially perpendicular, and the second section (32) and the third section (33) are substantially perpendicular.

4. The battery assembly according to claim 1, wherein an orthographic projection of the second section (32) on a plane where the first surfaces (12) are located is outside the first surfaces (12), and an orthographic projection of the second section (32) on the plane where the third surfaces (42) are located is outside the third surfaces (42).

5. The battery assembly according to claim 1, wherein the first post assembly (20) is disposed on the other one of the first surfaces (12) away from the second battery (2), the second post assembly (50) is disposed on the one of the third surfaces (42) adjacent to the first battery (1);
or, the first post assembly (20) is disposed on the one of the first surfaces (12) adjacent to the second battery (2), and the second post assembly (50) is disposed on the other one of the third surfaces (42) away from the first battery (1);
or, the first post assembly (20) is disposed on the one of the first surfaces (12) adjacent to the second battery (2), and the second post assembly (50) is disposed on the one of the third surfaces (42) adjacent to the first battery (1).

6. The battery assembly according to claim 1, wherein the first section (31) is welded to the first post assembly (20), and the third section (33) is welded to the second post assembly (50).

7. The battery assembly according to claim 1, wherein the busbar (30) and the first post assembly (20) are an integrated structure, or the busbar (30) and the second post assembly (50) are an integrated structure.

8. The battery assembly according to any one of claims 1-7, wherein a length of at least one of the first battery (1) and the second battery (2) is d, a width of at least one of the first battery (1) and the second battery (2) is e, a height of at least one of the first battery (1) and the second battery (2) is f, and 2e≤d≤50e, and/or 0.5f≤e≤20f;
400mm≤d≤2500mm.

9. An assembling method of a battery assembly, the assembling method comprising:
providing a first battery (1), wherein the first battery (1) includes a first post assembly (20);
providing a second battery (2), wherein the second battery (2) includes a second post assembly (50);
providing a busbar (30), wherein the busbar (30) is formed integrally, and is bent into a first section (31), a second section (32), and a third section (33), both ends of the second section (32) are respectively connected to the first section (31) and the third section (33), and the first section (31) and the third section (33) are disposed oppositely; and
connecting the first section (31) to the first post assembly (20), and connecting the third section (33) to the second post assembly (50),
wherein the first battery (1) further comprises two opposite first surfaces (12) and four second surfaces (13) disposed around the first surfaces (12), an area of each of the first surfaces (12) is greater than an area of each of the second surfaces (13), and the first post assembly (20) is disposed on one of the first surfaces (12),
the second battery (2) further comprises two opposite third surfaces (42) and four fourth surfaces (43) disposed around the third surfaces (42), an area of each of the third surfaces (42) is greater than an area of each of the fourth surfaces (43), and the second post assembly (50) is disposed on one of the third surfaces (42),
the one of the first surfaces (12) and the one of the third surfaces (42) are disposed opposite to each other, such that the first section (31) is located on a side of the one of the first surfaces (12) where the first post assembly (20) is provided, and the third section (33) is located on a side of the one of the third surfaces (42) where the second post assembly (50) is provided.

10. The assembling method of the battery assembly according to claim 9, wherein connecting the first section (31) to the first post assembly (20) and connecting the third section (33) to the second post assembly (50) comprise:
welding the first section (31) to the first pole assembly (20), such that the second section (32) extends in a direction away from the first battery (1);
placing one end of the second battery (2) between the first section (31) and the third section (33); and
welding the third section (33) to the second post assembly (50).

11. The assembling method of the battery assembly according to claim 9, wherein connecting the first section (31) to the first post assembly (20) and connecting the third section (33) to the second post assembly (50) comprise:
welding the first section (31) to the first post assembly (20), such that the second section (32) extends in a direction away from the first battery (1);
placing the second battery (2) on a side of the third section (33) away from the first section (31); and
welding the third section (33) to the second post assembly (50).
